# EUROPEAN PATENT APPLICATION

(11) **EP 4 815 010 A1**
(43) Date of publication of application: **30.09.2026**
(21) Application number: 24893946.4
(22) Date of filing: 28.10.2024
(51) Int. Cl.: H01G 11/36, H01G 11/28, H01G 11/42, H01G 11/68, H01M 4/36, H01M 4/133, H01M 4/587

(54) **ELECTRODE FILM, ELECTRODE, AND POWER STORAGE DEVICE**

(30) Priority: 22.11.2023 JP 2023198439
(71) Applicant: Materials Innovation Tsukuba Incorporated, Tsukuba-shi, Ibaraki 305-0047 (JP)
(72) Inventor: ZHANG, Kun, Tsukuba-shi, Ibaraki 305-0047 (JP); SHU, Min, Tsukuba-shi, Ibaraki 305-0047 (JP); XIAO, Long, Tsukuba-shi, Ibaraki 305-0047 (JP); HATO, Yukinori, Tsukuba-shi, Ibaraki 305-0047 (JP); TANG, Jie, Tsukuba-shi, Ibaraki 305-0047 (JP)
(74) Representative: Hasegawa, Kan
(86) International application number: PCT/JP2024/038323
(87) International publication number: WO 2025/109953

(57) **Abstract**

Provided are an electrode with high energy density per unit volume, and an electrode film, electrode, and power storage device capable of achieving a small-sized power storage device with high output density.

With a composition containing at least an aggregate 20 of a composite 10 of graphene and carbon nanotubes and binder resin 21b, the aggregate 20 having a particle diameter of 1 µm to 20 µm, an electrode film having a film density of 0.6 g/cm³ to 1.2 g/cm³ is formed, and an electrode having this electrode film provided on a charge collector is used to configure a power storage device.

## Description

### Technical Field

The present invention relates to an electrode film using graphene, and an electrode and power storage device including this electrode film.

### Background Art

Graphene is a sheet-like substance having a two-dimensional mesh structure with sp² carbon atoms coupled in a hexagonal shape and has high conductivity, high strength, and also high heat resistance, and therefore has attracted attention in various fields such as fields of electronics such as electronic materials, as well as biomaterials, medical materials, aerospace materials, and others. In particular, in a power storage device with high energy density such as a lithium ion capacitor or a lithium ion battery, electrodes using various types of graphene have been suggested for the purpose of increasing capacity, improving withstand voltage, further improving energy density and output density, and so forth (refer to Patent Literatures 1 to 3).

For example, described in Patent Literature is a super capacitor electrode using a solid graphene foam having a physical density of 0.01 g/cm³ to 1.7 g/cm³, a specific surface area of 50 m²/g to 3,300 m²/g, a thermal conductivity of at least 200 W/mK per unit specific gravity, and/or an electric conductivity of 2,000 S/cm per unit specific gravity when measurements are made in a dry state without an electrolyte. Also, described in Patent Literature 2 is a capacitor-purpose electrode using a graphene porous carbon sheet including a graphene porous carbon material and carbon nanotubes.

On the other hand, described in Patent Literature 3 is an electrode using a graphene aggregate having a particle diameter equal to or larger than 0.1 µm and smaller than 100 µm and having a graphene basic skeleton in which a fibrous substance such as carbon nanotubes is positioned between layers of graphene.

### Citation List

### Patent Literatures

Patent Literature 1: International Publication No. 2017/123463
Patent Literature 2: International Publication No. 2020/080520
Patent Literature 3: International Publication No. 2019/065004

### Summary of Invention

### Technical Problem

However, since the graphene material greatly tends to be re-layered in the process of fabricating an electrode, in the electrode using a porous graphene material described in Patent Literatures 1 and 2, particularly when an electrode film with high density is formed, a problem arises in which re-layering fills pores of the porous graphene to weaken the effect of promoting transport of an electrolyte solution to decrease capacity. On the other hand, although this problem does not arise in the electrode using a graphene aggregate in which a fibrous substance is present between layers of graphene described in Patent Literature 3, a further improvement in electrode performance has been desired in power storage devices in recent times.

Thus, the present invention has an object of providing an electrode with high energy density per unit volume, and an electrode film, electrode, and power storage device capable of achieving a small-sized power storage device with high output density.

### Solution to Problem

An electrode film according to the present invention includes an aggregate of a composite of graphene and carbon nanotubes and a binder resin, in which the aggregate has a particle diameter of 1 µm to 20 µm, and the electrode film has a film density of 0.6 g/cm³ to 1.2 g/cm³.

In the electrode film of the present invention, the binder may be present also inside the aggregate.

The composite of graphene and carbon nanotubes configuring the aggregate is, for example, a graphene multilayer body where the carbon nanotubes are present between layers of the graphene.

The electrode film of the present invention may further include a conductive material.

An electrode according to the present invention includes the above-described electrode film.

A power storage device according to the present invention includes the above-described electrode.

A power storage device of the present invention is, for example, an electric double layer capacitor and has an ΩF value smaller than 2.

### Advantageous Effects of Invention

According to the present invention, since an electrode with high energy density per unit volume can be obtained, it is possible to achieve a small-sized power storage device with high output density.

### Brief Description of Drawings

[Figure 1] An enlarged sectional view schematically depicting an electrode film of a first embodiment of the present invention.
[Figure 2] A drawing schematically depicting a mode of an aggregate 20.
[Figure 3] A drawing schematically depicting an example of structure of a graphene/CNT composite 10.
[Figure 4] A flowchart depicting a process of manufacturing an electrode film 30.
[Figure 5] A sectional view schematically depicting an example of structure of an electrode of a second embodiment of the present invention.
[Figure 6] A schematic view depicting an example of structure of a power storage device of a third embodiment of the present invention.

### Description of Embodiments

In the following, modes for implementing the present invention are described in detail with reference to the attached drawings. Note that the present invention is not limited to embodiments described below.

### (First Embodiment)

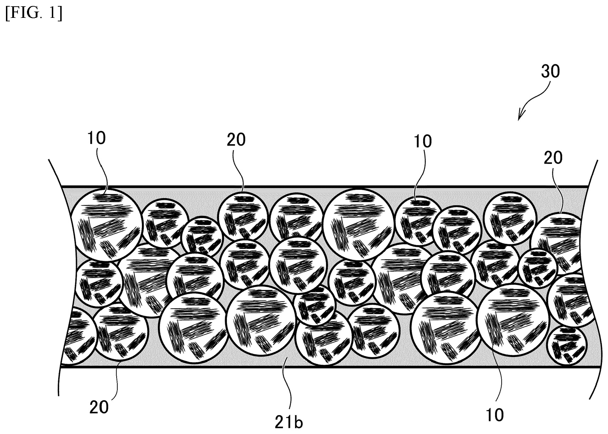

First, an electrode film according to a first embodiment of the present invention is described. Figure 1 is an enlarged sectional view schematically depicting an electrode film of the present embodiment. As depicted in Figure 1, an electrode film 30 of the present embodiment contains an aggregate 20 of a composite 10 of graphene and carbon nanotubes (hereinafter referred to as a graphene/CNT composite 10), and a binder resin. Here, the aggregate 20 included in the electrode film 30 of the present embodiment has a particle diameter of 1 µm to 20 µm, and the film density of the electrode film 30 is 0.6 g/cm³ to 1.2 g/cm³.

### [Aggregate 20]

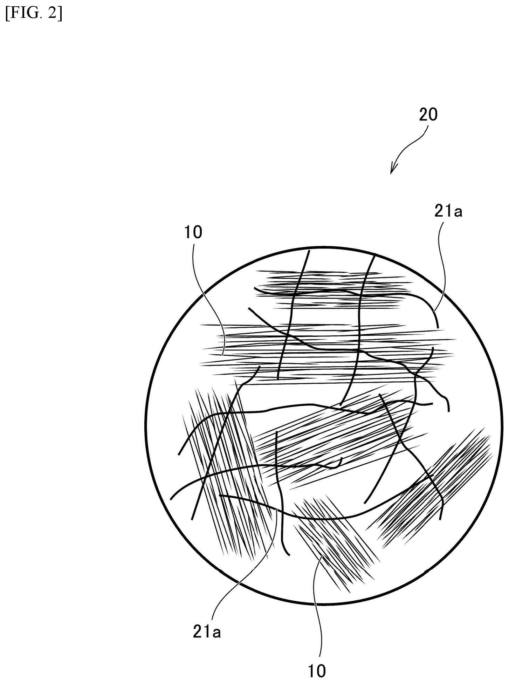

Figure 2 is a drawing schematically depicting a mode of the aggregate 20. As depicted in Figure 2, the aggregate 20 is one with the graphene/CNT composite 10 aggregating, in a state of keeping its shape, into a substantially spherical shape, and has a binder resin 21a being present inside. By using the graphene/CNT composite 10 in the state of the aggregate 20 when used for a power storage device such as an electric double layer capacitor, lithium ion capacitor, and lithium ion battery, it is possible to improve energy density and output density of these, while excellent conductivity and adsorption capability of electrolyte ions the graphene/CNT composite 10 has are kept.

### <Particle Diameter: 1 µm to 20 µm>

When the volume filling factor is the same, the smaller the particle diameter of a material, the higher the viscosity of slurry. Therefore, when an aggregate having a particle diameter smaller than 1 µm is used for the electrode film 30, the solid content cannot be increased, and the degree of difficulty of coating is increased, thereby making it difficult to fabricate a uniform electrode film. On the other hand, when the particle diameter of the material increases, a larger gap tends to be formed. Therefore, when the aggregate 20 of a size having a particle diameter exceeding 20 µm is used, it is impossible to improve volumetric energy density of a cell by increasing the density of the electrode film. Moreover, this influences diffusion of electrolyte ions and also influences rapid charging and discharge behavior. Therefore, in the electrode film 30 of the present embodiment, the aggregate 20 having a particle diameter of 1 µm to 20 µm is used. Note that the particle diameter of the aggregate 20 herein has a value measured by laser diffraction scattering method.

### <Graphene/CNT Composite 10>

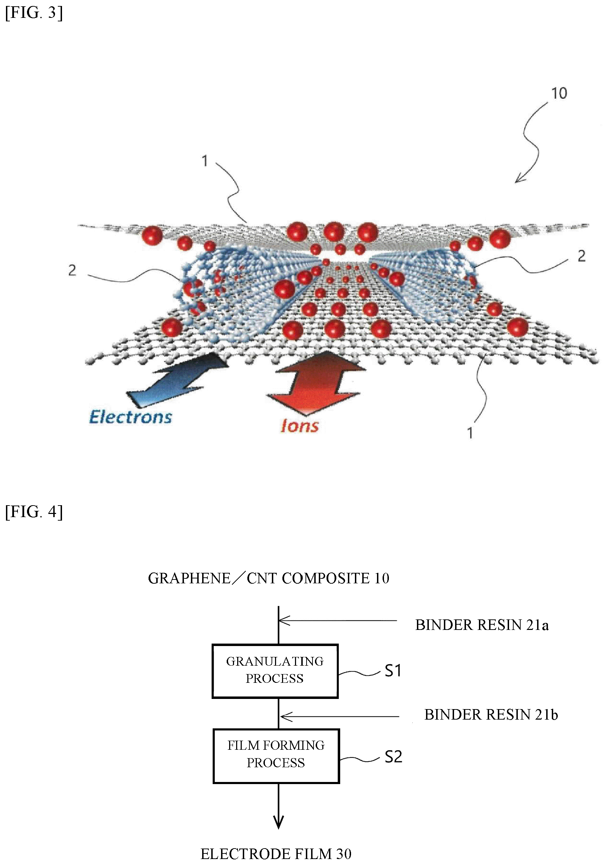

Figure 3 is a drawing schematically depicting an example of structure of the graphene/CNT composite 10. As the graphene/CNT composite 10, for example, a graphene layered body as depicted in Figure 3 can be used in which monolayer graphene 1 and carbon nanotubes (CNT) 2 are alternately layered, and the carbon nanotubes 2 are present between layers of graphene 1. Note that the graphene/CNT composite 10 configuring the aggregate 20 is not limited to the one having the structure depicted in Figure 3, and is only required to be a composite of the graphene 1 and the carbon nanotubes (CNT) 2.

Specifically, while the graphene layers 1 are regularly arranged so as to be equidistantly and mutually parallel to each other in the graphene/CNT composite 10 depicted in Figure 3, the graphene 1 may be arranged in a random manner. Also, while the carbon nanotubes (CNT) 2 are arranged mutually parallel to one another in an in-plane direction in the graphene/CNT composite 10 depicted in Figure 3, the present invention is not limited to this, and the carbon nanotubes (CNT) 2 may be arranged in a random manner between layers of the graphene 1.

The type of carbon nanotubes (CNT) 2 in the graphene/CNT composite 10 is not particularly restrictive, and may be any of single-walled carbon nanotubes (SWCNT), double-walled carbon nanotubes (DWCNT), and multi-walled carbon nanotubes (MWCNT). The size of the carbon nanotubes (CNT) 2 is not particularly restrictive and, in view of promoting uniform dispersion of the carbon nanotubes (CNT) 2 in the graphene 1 and efficiently making a composite with the graphene 1, preferably has a length of 1 µm to 20 µm and also preferably has an average outer diameter of 0.4 nm to 5.0 nm and more preferably 1.0 nm to 3.0 nm.

While the graphene 1 has a feature of being more aggregable by π-π stacking, since the carbon nanotubes (CNT) 2 present between layers of the monolayer graphene 1 function as a spacer in the graphene/CNT composite 10, stacking is prevented, and a high specific surface area can be ensured. Also, when the composite is processed into an electrode, an electrolyte solution flows into a gap between layers of the monolayer graphene 1, and electrolyte solution ions tend to be adsorbed onto the graphene surface. Furthermore, since the carbon nanotubes 2 with high electric conductivity are present between layers of the graphene 1 in the graphene/CNT composite 10, electric conductivity in a thickness direction is also high.

### [Binder Resin]

As a binder resin, any of organic-solvent-based binders and water-based binders generally used in an electrode film can be selected for use. Specifically, polytetrafluoroethylene resin (PTFE), its denatured polytetrafluoroethylene resin, poly (vinylidene fluoride) (PVDF), and so forth can be cited as an organic-solvent-based binder, and carboxymethyl cellulose sodium (CMC), styrene-butadiene-rubber (SBR), and so forth can be cited as a water-based binder. These may be used singly or may be used in combination of a plurality thereof.

Also, particularly among these resins, it is preferable to combine CMC and SBR of water-based binders for use. Furthermore, a binder resin 21a present inside the aggregate 20 and a binder resin 21b present outside the aggregate 20 to couple the aggregate 20 together may be the same or different.

### [Film Density]

The electrode film 30 of the present embodiment has a film density of 0.6 g/cm³ to 1.2 g/cm³ and preferablly 0.6 g/cm³ to 1.0 g/cm³. When the film density is smaller than 0.6 g/cm³, the conductivity of the electrode film 30 is decreased, and the volumetric energy density of the electrode cannot be improved. On the other hand, when the film density of the electrode film 30 exceeds 1.2 g/cm³, the electrolyte solution becomes difficult to permeate, and therefore influences the performance of the cell.

### [Conductive Material]

The conductive material to be added to the electrode film 30 of the present embodiment is not particularly restrictive, and is only required to be one generally used as a conductive material in the electrode film. In view of affinity for graphene, a carbon material is preferable such as carbon black, acetylene black, channel black, furnace black, ketjen black, and carbon nanotube (CNT).

### [Method of Manufacturing Electrode Film 30]

Figure 4 is a flowchart depicting a process of manufacturing the electrode film 30 of the present embodiment. The electrode film 30 of the present embodiment can be manufactured by performing, for example, as depicted in Figure 4, a granulating process S1 of forming the aggregate 20 of the graphene/CNT composite 10 and a film forming process S2 of forming the electrode film 30 by using the aggregate 20.

### <Step S1: Granulating Process>

In the granulating process S1, for example, by dispersing the graphene/CNT composite 10 with the binder resin 21a into a low alcohol having a carbon number of 1 to 5 or a mixed solution of this low alcohol and water, the aggregate 20 of the graphene/CNT composite 10 is formed. In the granulating process S1, by adding a binder resin, the binder resin 21a enters the inside of the formed aggregate 20, thereby improving structural stability of the aggregate 20. The binder resin 21a for use herein may be the same as or different from the binder resin 21b for use in the film forming process S2 described below.

### <Step S2: Film Forming Process>

In the film forming process S2, the aggregate 20 acquired at the granulating process S1 is used to form the electrode film 30. The film forming process S2 may be performed by using either a wet process or a dry process. In the wet process, it is only required that, for example, coating is performed, with the use of a roll coater or the like, with one obtained by slurrying by adding the binder resin 21b, a conductive material as required, and a solvent such as water to the aggregate 20 and mixing them well, and then the electrode films are dried.

On the other hand, in the dry process, it is only required, for example, to knead the aggregate 20 and a conductive material as required into the binder resin 21b by using a kneader or the like and form the electrode film by extrusion molding or press molding so that the electrode film has a predetermined thickness. The amount of the binder resin 21b mixed in the dry process can be, for example, 0.5 mass% to 10 mass% of the total mass of the electrode film. Furthermore, when adding the conductive material, its amount can be 1 mass% to 20 mass% to total mass of the electrode film.

In the above-described film forming process S2, loads are applied at the time of mixing or kneading to destroy part of the aggregate 20 and, in some cases, the performance of the electrode film 30 cannot be sufficiently obtained. On the other hand, in the electrode film 30 of the present embodiment, the aggregate 20 with structural stability improved by the binder resin 21a is used. Therefore, the aggregate 20 is not destroyed even with mixing or kneading in the film forming process S2, and the electrode film 30 excellent in performance can be stably manufactured. As a result, durability, cycle performance, rapid charging/discharging performance of the power storage device manufactured by using this electrode film 30 can be improved.

As has been described in detail in the foregoing, the electrode film of the present embodiment contains the aggregate of the graphene/CNT composite and the binder resin, the aggregate has a particle diameter of 1 µm to 20 µm, and the electrode film has a film density of 0.6 g/cm³ to 1.2 g/cm³. Therefore, an electrode with high energy density per unit volume can be obtained, and a small-sized power storage device with high output density can be achieved.

Since the graphene/CNT composite used in the electrode film of the present embodiment has a layered structure, the ion adsorption rate is faster than that of activated carbon used in a conventional catalytic film, and the complete ejection amount of the adsorbed ions is also large. Thus, the electrode film of the present embodiment is excellent in ion adsorption performance, and is suitably used not only in the above-described power storage device but also as a catalytic film.

### (Second Embodiment)

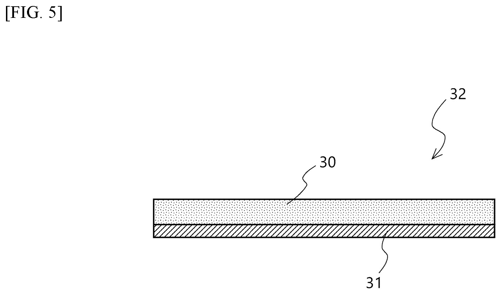

Next, an electrode according to a second embodiment of the present embodiment is described. The electrode of the present embodiment includes the electrode film 30 of the first embodiment described above. Figure 5 is a sectional view schematically depicting an example of structure of the electrode of the present embodiment. An electrode 32 of the present embodiment can have a structure, for example, as depicted in Figure 5, in which the electrode film 30 is provided on a charge collector 31.

### [Charge Collector 31]

The material of the charge collector 31 is not particularly limited. However, when the charge collector is used for the purpose of, for example, a lithium ion capacitor or a lithium ion battery, an aluminum foil, a carbon-coated aluminum foil, an aluminum perforated foil, an etching aluminum foil, or the like can be used. Also, the thickness of the charge collector 31 can be set as appropriate in accordance with the use purpose or the performance required and, for example, preferably 10 µm to 30 µm.

### [Manufacturing Method]

The electrode 32 of the present embodiment may be formed, for example, by preparing a slurry in which the graphene/CNT composite 10, a conductive material, and a binder resin are mixed sufficiently together with a solvent such as water, coating the slurry onto both surfaces of a metal-foil current collector 31 made of an aluminum etching foil or the like by using a roll coater or the like to form the electrode film 30, and then drying it. Alternatively, the electrode can be formed by kneading the graphene/CNT composite 10, a conductive material, and a binder resin and providing the electrode films 30 on both surfaces of the metal foil charge collector 31 made of an aluminum etching foil and the like by extrusion molding, press molding, or the like.

### [Use Purposes]

The electrode 32 of the present embodiment can be used for various use purposes, including various capacitors such as a lithium ion capacitor, various secondary batteries such as a lithium ion battery, and other power storage devices, as well as a fuel cell, various batteries for reaction, and so forth.

In the electrode of the present embodiment, an electrode film is provided on one side or both sides of a charge collector, the electrode film containing an aggregate of a graphene/CNT composite and binder resin, the aggregate having a particle diameter of 1 µm to 20 µm, and the electrode film having a film density of 0.6 g/cm³ to 1.2 g/cm³. Thus, the energy density per unit volume is high. Therefore, by using the electrode of the present embodiment, a small-sized power storage device with high output density can be achieved.

### (Third Embodiment)

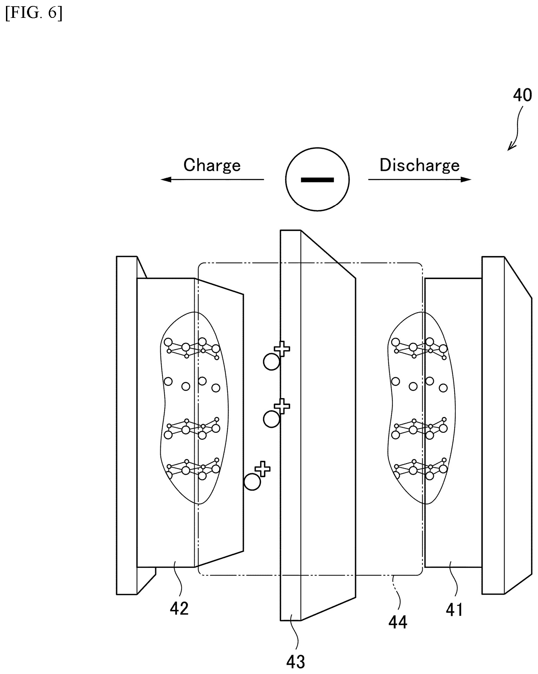

Next, a power storage device according to a third embodiment of the present embodiment is described. The power storage device of the present embodiment includes the electrode of the second embodiment described above. Figure 6 is a schematic view depicting an example of structure of a poser storage device of the present embodiment. For example, when the power storage device of the present embodiment is an electric double layer capacitor 40 depicted in Figure 6, the configuration is such that a positive pole (cathode) 41 and a negative pole (anode) 42 are arranged as opposed so as to be spaced from each other across a spacer 43 and a space between these electrodes is filled with an Li ion electrolyte 44.

As the electrolyte 44, it is possible to use, for example, an ionic liquid such as 1-ethyl-3-methylimidazolium bis (trifluoromethanesulfonyl) imide (EMI-TFSI), 1-ethyl-3-methylimidazolium borofluoride (EMI-BF₄), or 1-methyl-1-propylpiperidinium [bis(trifluoromethylsulfonyl)] imide (MPPp-TFSI), or M'OH (M' is an alkali metal).

Further, in this electric double layer capacitor 40, the electrode 32 of the second embodiment described above is used as the positive pole (cathode) 41 or for both of the positive pole (cathode) 41 and the negative pole (anode) 42. When the power storage device of the present embodiment is the electric double layer capacitor 40 in the structure depicted in Figure 6, the ΩF value is preferably set to be equal to or smaller than 2, thereby allowing rapid charging and discharging.

The power storage device of the present embodiment is not limited to the electric double layer capacitor described above, and can be applied to various power storage devices including various capacitors such as a lithium ion capacitor, various secondary batteries such as a lithium ion battery, a fuel cell, and so forth.

In the power storage device of the present embodiment, an electrode is used in which an electrode film is provided on one side or both sides of a charge collector, the electrode film containing an aggregate of a graphene/CNT composite and binder resin, the aggregate having a particle diameter of 1 µm to 20 µm, and the electrode film having a film density of 0.6 g/cm³ to 1.2 g/cm³. Thus, the energy density per unit volume is high, and reduction in size and high output density can be achieved.

### [Examples]

In the following, the effects of the present invention are specifically described by listing examples and comparative examples.

### (First Comparative Example)

An electrode of a first comparative example was fabricated by the following method. 87 parts by mass of an aggregate of a graphene/CNT composite (powder having a particle diameter of 5 µm), 5 parts by mass of acetylene black powder as a conductive material, 4 parts by mass of an acrylic binder as a binder resin, 4 parts by mass of carboxymethyl cellulose, and 310 parts by mass of water were mixed to formulate slurry. As a charge collector, aluminum etching foil having a thickness of 22 µm was used, and both sides thereof were coated with the above-described slurry by a roll coater to form electrode films. After vacuum drying, an electrode having a thickness of 175 µm (total thickness of the charge collector and the electrode films on both surfaces thereof) was obtained.

### (First Example)

An electrode of a first example having a thickness of 51 µm was fabricated by a method similar to that of the first comparative example except press molding.

### (Second Example)

An electrode of a second example having a thickness of 45 µm was fabricated by a method similar to that of the first example.

### (Third Example)

An electrode of a third example having a thickness of 37 µm was fabricated by a method similar to that of the first example.

### (Fourth Example)

An electrode of a fourth example having a thickness of 34 µm was fabricated by a method similar to that of the first example.

### (Second Comparative Example)

An electrode of a second comparative example having a thickness of 31 µm was fabricated by a method similar to that of the first example.

### (Third Comparative Example)

An electrode of a third comparative example having a thickness of 27 µm was fabricated by a method similar to that of the first example.

### [Resistance Measurement]

For each of the electrodes of the examples and the comparative examples fabricated by the above-described methods, the electrode resistance measurement system RM2610 manufactured by Hioki E.E. Corporation was used to measure resistance per unit volume by the four-point probe method.

### [Fabrication of Cell for Evaluation]

Each electrode (positive pole(cathode) and negative pole(anode)) of the examples and the comparative examples fabricated by the above-described method was cut out into a size of 30 mm long ×30 mm wide; five positive poles(cathodes) and six negative poles (anodes) were multilayered each via a separator; and, after separators were arranged as the uppermost layer and the lowermost layer, four sides were taped to obtain positive-pole(cathode) and negative-pole (anode) electrode multilayer units. To a terminal weld portion (width of 10 mm) of a positive charge collector and a negative collector of these electrode multilayer units, an aluminum-made terminal (width of 5 mm, thickness of 0.1 mm) was stacked for ultrasonic welding. The welding area at that time was (Yw: 3 mm)×(Xw: 3 mm).

After each electrode multilayer unit was dried for twelve hours under a temperature condition of 120 degrees Celsius, the second side was folded back in a state in which an end portion of an electrode terminal was pulled out outside an exterior laminate film pouch, the first side and the second side of a terminal portion of the exterior laminate film were heat-sealed with a sealing width of 2 mm. Next, after EMI-BF₄ (1-ethyl-3-methylimidazolium tetrafluoroborate) was vacuum-impregnated as an electrolyte solution, the remaining fourth side was heat-sealed under a reduced pressure with a sealing width of 2 mm, and then vacuum-sealed, thereby assembling a film-shaped capacitor cell. Lastly, the second side and the fourth side were folded once, and the cell was set as a cell for evaluation.

### [Cell's Characteristic Evaluation]

By using a multi-channel potentiostat galvanostat (VMP-300 manufactured by Bio-Logic), electrochemical measurements of the cell for evaluation fabricated by the above-described method were performed. Specifically, charging was performed until the cell voltage became 3.7 V with a constant current of 0.2 A/g, and then discharging was performed until the cell voltage became 0 V with a constant current of 0.2 A/g. Then, the initial electrostatic capacity was found from the discharge curve between the voltage Vmax at the start of discharge and 0 V.

The results from the above are depicted in Table 1 below.

**[Table 1]**

| | ELECTRODE THICKNESS (µm) | ELECTRODE FILM DENSITY (g/cm³) | RESISTANCE PER UNIT VOLUME (Ω cm) | CELL CAPACITY (F) | SPECIFIC CAPACITANCE (F/g) | GRAVIMETRIC ENERGY DENSITY (Wh/kg) | VOLUMERIC ENERGY DENSITY (Wh/L) | CELL DC RESISTANCE (Ω) | ΩF VALUE |
|---|---|---|---|---|---|---|---|---|---|
| FIRST EXAMPLE | 51 | 0.68 | 0.21 | 11.5 | 169 | 80 | 48 | 0.14 | 1.6 |
| SECOND EXAMPLE | 45 | 0.78 | 0.15 | 11.7 | 172 | 82 | 55 | 0.12 | 1.4 |
| THIRD EXAMPLE | 37 | 0.93 | 0.12 | 11.6 | 170 | 81 | 65 | 0.11 | 1.3 |
| FOURTH EXAMPLE | 34 | 1.01 | 0.09 | 11.1 | 163 | 77 | 68 | 0.16 | 1.8 |
| FIRST COMPARATIVE EXAMPLE | 175 | 0.22 | 0.52 | 12.0 | 175 | 83 | 16 | 0.47 | 5.6 |
| SECOND COMPARATIVE EXAMPLE | 31 | 1.13 | 0.08 | 8.9 | 131 | 62 | 61 | 0.58 | 5.2 |
| THIRD COMPARATIVE EXAMPLE | 27 | 1.27 | 0.08 | 5.8 | 86 | 41 | 45 | 0.91 | 5.3 |

As depicted in Table 1 above, while the electrode of the first comparative example had a large mass specific capacitance of 175 F/g, the density of the electrode film is small, 0.22 g/cm³, and therefore the resistance per unit volume was large, 0.52 Ω cm. Thus, the obtained battery had a large gravimetric energy density of 83 Wh/kg, but a volumetric energy density of merely 16 Wh/L, a large cell DC resistance of 0.47 Ω, an ΩF value of 5.6. The electrode was thus not suitable for rapid charging and discharging.

Compared with the electrode of the first comparative example, in the electrodes of the second and third comparative examples, the density of the electrode film increased. Therefore, while the resistance of the electrode film decreased, diffusion of the electrolyte in the electrode became difficult, and the specific capacitance of the cell decreased, causing the energy density to decrease and also the DC current of the cell to increase. Specifically, the specific capacitance was 131 F/g and the ΩF value was 5.2 in the electrode of the second comparative example, and the specific capacitance was 86 F/g and the ΩF value was 5.3 in the electrode of the third comparative example. Thus, the electrodes of the second and third comparative examples were also not suitable for rapid charging and discharging.

By contrast, in the electrodes of the first to fourth examples fabricated in the scope of the present invention, while the electrode film density was increased from 0.68 g/cm³ (first example) to 1.01 g/cm³ (fourth example), the resistance per unit volume of the electrode film decreased from 0.1 Ω cm (first example) to 0.009 Ω cm (fourth example). Also, the specific capacitance was kept in the neighborhood of 170 F/g. Thus, the cell fabricated by using any of the electrodes of the first to fourth examples had a high gravimetric energy density and, as the electrode density increased, the volumetric energy density also increased from 48 Wh/L (first example) to 68 Wh/L (fourth example). In this film density range, the increase in the electrode film density did not influence diffusion of the electrolyte in the electrode film, and the obtained battery still had a favorable DC resistance and the ΩF value was 1.3 to 1.8. In this manner, the electrodes of the first to fourth examples were suitable for rapid charging and discharging.

From the results above, according to the present invention, it has been confirmed that an electrode with high energy density per unit volume and a small-sized power storage device with high output density can be achieved.

### Reference Signs List

- 1: graphene
- 2: carbon nanotube (CNT)
- 10: graphene/CNT composite
- 20: aggregate
- 21a, 21b: binder resin
- 30: electrode film
- 31: charge collector
- 32: electrode
- 40: electric double layer capacitor
- 41: positive pole (cathode)
- 42: negative pole (anode)
- 43: spacer
- 44: electrolyte

## Claims

1. An electrode film including:
an aggregate of a composite of graphene and carbon nanotubes; and
binder resin, wherein
the aggregate has a particle diameter of 1 µm to 20 µm, and
the electrode film has a film density of 0.6 g/cm³ to 1.2 g/cm³.

2. The electrode film according to claim 1, wherein the binder is present also inside the aggregate.

3. The electrode film according to claim 1 or 2, wherein the composite of graphene and carbon nanotubes configuring the aggregate is a graphene multilayer body where the carbon nanotubes are present between layers of the graphene.

4. The electrode film according to any one of claims 1 to 3, further including a conductive material.

5. An electrode comprising the electrode film according to any one of claims 1 to 4.

6. A power storage device comprising the electrode according to claim 5.

7. The power storage device according to claim 6, wherein the power storage device is an electric double layer capacitor and has an ΩF value smaller than 2.
